# EUROPEAN PATENT SPECIFICATION

(11) **EP 1 997 785 B1**
(45) Date of publication and mention of the grant of the patent: **12.10.2011**
(21) Application number: 07739305.6
(22) Date of filing: 22.03.2007
(51) Int. Cl.: C03C 27/12, B32B 17/10, C08K 5/00, B32B 27/30, C08K 5/132

(54) **INTERMEDIATE FILM FOR LAMINATED GLASS, LAMINATED GLASS USING SAME, AND METHOD FOR PRODUCING SUCH LAMINATED GLASS**
ZWISCHENFILM FÜR SCHICHTGLAS, SCHICHTGLAS DAMIT UND VERFAHREN ZUR HERSTELLUNG EINES DERARTIGEN SCHICHTGLASES
FILM INTERMEDIAIRE POUR VERRE FEUILLETE, VERRE FEUILLETE UTILISANT CELUI-CI ET PROCEDE DE FABRICATION D'UN TEL VERRE FEUILLETE

(30) Priority: 23.03.2006 JP 2006080947; 23.03.2006 JP 2006080937
(43) Date of publication of application: 03.12.2008
(73) Proprietor: Bridgestone Corporation, Tokyo 104-0031 (JP)
(72) Inventor: HASHIMOTO, Masao, Yokohama-shi Kanagawa 244-8510 (JP)
(74) Representative: Whalley, Kevin
(86) International application number: PCT/JP2007/055862
(87) International publication number: WO 2007/108506

(56) References cited:
- EP-A2- 0 148 397
- EP-A2- 0 396 349
- WO-A1-03/033548
- WO-A1-2004/009354
- JP-A- 06 211 548
- JP-A- 2000 038 456
- JP-A- 2003 176 159
- US-A- 5 632 835
- US-A1- 2003 111 159

## Description

### Background of Invention

### Field of the invention

The present invention relates to an intermediate film used in a laminated glass including a film-reinforced glass, which has excellent impact resistance and penetration resistance (resistance to passing through) and is effective in prevention of crimes, and which is used in an automobile, a railway vehicle, a building and a showcase, and a laminated glass and a process for the preparation thereof.

### Description of the Related Art

As a glass used in automobile, especially windshield, a laminated glass having a structure that two glass plates are bonded through a transparent adhesive layer (intermediate layer) is generally employed. The transparent adhesive layer is formed from, for example, PVB (polyvinyl butyral) or EVA (ethylene-vinyl acetate copolymer), and the use of the transparent adhesive layer enhances penetration resistance of the laminated glass. If external impact is given to the laminated glass, the transparent adhesive layer prevents the glass broken by the impact from scattering because the layer adheres to pieces of the broken glass. Even if the laminated glass for automobile is destroyed for the purpose of robbery or invasion, the window of the laminated glass cannot be opened. Hence, the laminated glass is useful as glass for prevention of crimes. The laminated glass is, for example, described in Patent Document 1 (JP2002-187746A).

In contrast, side windows (side glasses) such as door glass and a glass inserted in window in automobile are scarcely destroyed due to traffic accident, and therefore the glasses do not need such excellent penetration resistance as the above-mentioned laminated glass has. As a result, for the door glass, one glass plate consisting of slightly reinforcing glass has been employed. However, in case only such a glass plate is used in the door glass, which brings about the following disadvantages:
(1) the glass is poor in impact resistance and penetration resistance (passing through resistance) compared with the laminated glass;
(2) if the glass is destroyed for the purpose of robbery or invasion, it turns into many pieces of the glass to permit window to open.
   Therefore, it is also now under investigation to use a glass having characteristics of the laminated glass for the side window of an automobile (e.g. a door glass or inserted glass).
   As the laminated glass suitable for the above-mentioned use, Patent Document 2 (JP2002-046217A) and Patent Document 3 (JP2002-068785A) describe a film-reinforced glass in which a plastic film is superposed on a glass plate through a transparent adhesive layer.

Hence, an intermediate film for a laminated glass (i.e., the transparent adhesive layer) having function that bonds two glass plates to each other or a glass plate (for film-reinforced glass) to a plastic film is required to have excellent adhesion and penetration resistance mentioned above. Particularly, further enhanced adhesion and penetration resistance are required in the laminated glass bonding two glass plates to each other.

However, a laminated glass using PVB film as an intermediate film for a laminated glass shows excellent penetration resistance and impact resistance, while it is apt to exhibit reduced transparency and adhesion with long-term use due to its insufficient humidity resistance.

In contrast, a laminated glass using EVA film shows excellent water resistance, adhesion property and penetration resistance, while it is apt to show insufficient transparency.

Patent Document 4 (JP2004-50750A) proposes a glass laminate comprising a first adhesive resin layer mainly consisting of polyvinyl butyral resin and a second adhesive resin layer mainly consisting of ethylene-vinyl acetate copolymer resin interposed between two substrates, which can be maintained in transparency and adhesion with long-term use due to excellent humidity resistance and shows excellent sound insulation, impact resistance and penetration resistance.

Patent Document 1: JP2002-187746A
Patent Document 2: JP2002-046217A
Patent Document 3: JP2002-068785A
Patent Document 4: JP2004-50750A
Patent Document 5: JP2003-327455A (described later)

### Summary of the Invention

### Problem to be Solved by the Invention

A laminated glass having a composite film comprising a PVB layer and an EVA layer as described in Patent Document 4 is excellent in transparency, adhesion, impact resistance and penetration resistance. Such composite film (intermediate film) used in the laminated glass usually contains additives such as an ultraviolet absorber to enhance light resistance and weather resistance. Patent Document 4 describes that the PVB layer contains no ultraviolet absorber while the EVA layer contains a benzophenone compound.

As for an ultraviolet absorber used in a laminated glass using a PVB layer, Patent Document 5 (JP2003-327455A) describes that though a benzotriazole compound has been used in the past, a malonic ester compound and/or an oxalic anilide compound are suitable to enhance weather resistance.

Study of the present inventor has revealed that when the benzotriazole ultraviolet absorber, which is generally used in a PVB layer, is used in an intermediate film for a laminated glass having structure of PVB layer /EVA layer, the EVA layer is apt to turn yellow. Further study has clarified that the use of a benzophenone compound as ultraviolet absorber extremely improves the yellowing in the structure of PVB layer /EVA layer.

In view of the above viewpoints, the object of the present invention is to provide an intermediate film for a laminated glass having excellent transparency, adhesion, penetration resistance and impact resistance as well as excellent light resistance and weather resistance, and scarcely turning yellow in a heating treatment during its preparation.

In view of the above viewpoints, the object of the present invention is to provide an intermediate film for a laminated glass having excellent sound insulation in addition to the above-mentioned excellent properties, and greatly enhanced in the impact resistance and penetration resistance.

Furhter, the object of the present invention is to provide a laminated glass having excellent transparency, adhesion, penetration resistance and impact resistance as well as excellent light resistance and weather resistance, and scarcely turning yellow in a heating treatment during its preparation.

Furthermore, the object of the present invention is to provide a laminated glass having excellent sound insulation in addition to the above-mentioned excellent properties, and greatly enhanced in the impact resistance and penetration resistance.

Still, the object of the present invention is to provide a process for the preparation of a laminated glass having excellent transparency, adhesion, penetration resistance and impact resistance as well as excellent light resistance and weather resistance, and scarcely turning yellow in a heating treatment during its preparation.

### Means for Solving Problem

(1) The above object is attained by the present invention, i.e., an intermediate film for a laminated glass comprising a laminate consisting of a layer (PVB layer) of a composition comprising polyvinyl butyral and a crosslinked layer (EVA layer) of a composition comprising ethylene/vinyl acetate copolymer containing an organic peroxide, wherein the composition comprising polyvinyl butyral contains a benzophenone compound as an ultraviolet absorber and the composition comprising polyvinyl butyral and the composition comprising ethylene/vinyl acetate copolymer contain no alkali metal salt or alkali earth metal salt of fatty acid.
Alkali metal salt or alkali earth metal salt of fatty acid is generally used as an adhesion regulator. Examples include alkali earth metal salt of fatty acid (generally fatty acid having 1 to 12 carbon atoms), especially magnesium octylate. The adhesion regulator is apt to form a chelate complex with the benzophenone compound to allow the layer to turn yellow

The preferred embodiments of the intermediate film for a laminated glass according to the present invention are described as follows:
(2) The intermediate film is a three or more layered laminate that at least one PVB layer and at least one EVA layer are alternately superposed on each other.
(3) The intermediate film is a three layered laminate that an EVA layer is superposed on the other side of the PVB layer (i.e., a three layered laminate that the EVA layer, the PVB layer and the EVA layer are superposed on each other in this order). In case the intermediate film is interposed between two glass plates, the EVA layer having excellent adhesion to a glass plate is in contact with a surface of the glass plate whereby the laminated glass is greatly enhanced in adhesion. Hence, if the glass plate is broken by the impact, the intermediate film greatly prevents pieces of the broken glass from scattering.
(4) The intermediate film is a three layered laminate that the PUB layer, the EVA layer and a PVB layer are superposed on each other in this order.
(5) The composition comprising polyvinyl butyral (preferably both of the composition comprising polyvinyl butyral and the composition comprising ethylene/vinyl acetate copolymer) contains no benzotriazole compound (i.e., a compound having benzotriazole framework) as an ultraviolet absorber. Even if the benzophenone compound is contained in either the PVB layer or the EVA layer, the ERA layer turns yellow when the EVA layer is crosslinked by heating for preparing the intermediate film.
(6) The composition comprising ethylene/vinyl acetate copolymer contains a benzophenone compound (i.e., a compound halving benzophenone framework) as an ultraviolet absorber.
(7) The benzophenone compound is a compound represented by the following formula (I): 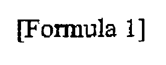 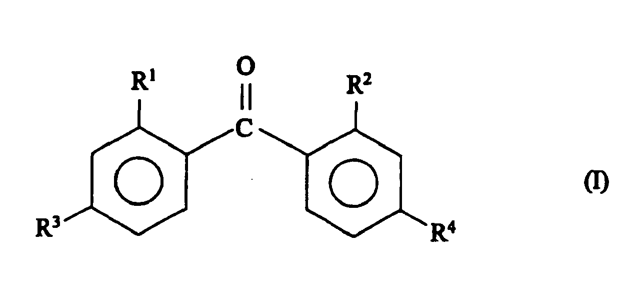
in which R¹ represents a hydroxy group, R² represents a hydrogen atom or a hydroxy group, R³ represents a hydrogen atom, a hydroxy group, an alkyl group of 1 to 14 carbon atoms or an alkoxy group of 1 to 14 carbon atoms, and R⁴ represents a hydrogen atom, a hydroxy group, an alkyl group of 1 to 14 carbon atoms or an alkoxy group of 1 to 14 carbon atoms.
(8) The PVB layer has a thickness of not less than 0.1mm, and the EVA layer has a thickness of not less than 0.1mm.
(9) A total thickness of all the PVB layer(s) is in the range of 0.1 to 2.0mm. When the total thickness is more than 2.0mm, the intermediate film has much increased thickness so that the resultant laminate becomes bulky and shows reduced transparency. In contrast, when the total thickness is less than 0.1mm, the performance (e.g., high viscoelasticity at room temperature) of the PVB layer is not sufficiently given to the intermediate film. A total thickness of all the PVB layer(s) is preferably in the range of 0.1 to 0.6mm.
(10) A total thickness of all the EVA layer(s) is in the range of 0.1 to 1.0mm. When the total thickness is more than 1.0mm, the intermediate film has much increased thickness so that the resultant laminate becomes bulky and shows reduced transparency. In contrast, when the total thickness is less than 0.1mm, the performance (e.g., high viscoelasticity at low temperature, humidity resistance, sound insulation) of the EVA layer is not sufficiently given to the intermediate film. A total thickness of all the PVB layer(s) is preferably in the range of 0.6 to 1.0mm (11) A ratio (EVA layer(s)/PBV layer(s)) of the total thickness of all the EVA layer(s) to the total thickness of all the PVB layer(s) is in the range of 1 to 6, especially 1 to 4. In a reduced total thickness of the EVA layer and the PVB layer, the ratio can be considered as scale to obtain improved penetration resistance.
(12) A total thickness of all the EVA layer(s) and all the PVB layer(s) is in the range of 0.3 to 3.0mm, preferably 0.7 to 1.5mm., especially 0.7 to 1.0mm. The thickness is suitable for a laminated glass.
(13) A vinyl acetate recurring unit of the ethylene-vinyl acetate copolymer is contained in the ethylene-vinyl acetate copolymer in the amount of 23 to 38% by weight based on 100 parts by weight of the ethylene-vinyl acetate copolymer. Thereby excellent transparency can be obtained.
(14) The ethylene-vinyl acetate copolymer has Melt Flow Index (MFI) of 1.5 to 30.0g/10min. Thereby preliminary pressure bonding can be facilitated.
(15) The composition comprising polyvinyl butyral contains a benzophenone compound in an amount of 0.0 to 3.0 part by weight, preferably 0.01 to 3.0 part by weight, especially 0. 1 to 2.0 part by weight based on 100 parts by weight of polyvinyl butyral.
(16) The ethylene-vinyl acetate copolymer contains the organic peroxide in an amount of 0.0 to 5.0 part by weight, preferably 0.05 to 5.0 part by weight, further preferably 0.05 to 4.0 part by weight, especially 0. 5 to 3.0 part by weight based on 100 parts by weight of ethylene-vinyl acetate copolymer.

Further, the present invention is provided by a laminated glass comprising two transparent substrates and the intermediate film as mentioned above provided therebetween, the transparent substrates and the intermediate film being integrated by bonding them with each other.

In the laminated glass, it is preferred that both the two transparent substrates are glass plates, and that one of the two transparent substrates is a glass plate and the other is a plastic film. Further, both the two transparent substrates may be plastic films.

The laminated glass can be advantageously obtained by a process for the preparation of a laminated glass comprising:
passing the intermediate film as mentioned above interposed between two transparent substrates through nip rollers, and pressing them to form a laminate, and then crosslinking the laminate by heating.

In the process, the nip rollers preferably have temperature of 70 to 130°C. Further, it is not required that a heating and pressing treatment (i.e., autoclave treatment), whereby a defoaming process can be carried out, is carried out before passing the intermediate film through the nip roller, and hence it is preferred that the heating and pressing treatment is not carried out.

In the invention, the thicknesses of the PVB layer and the EVA layer is preferably set to the conditions as mentioned in the items (8) to (12), whereby a laminated glass having greatly improved penetration resistance and impact resistance can be easily obtained.

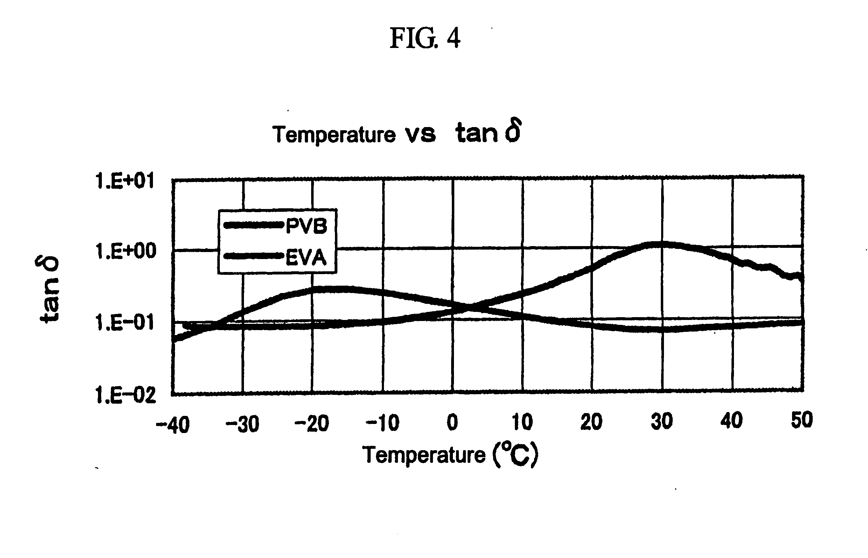

In more detail, the present inventor has studied viscoelasticities of a PVA layer and an EVA layer constituting the intermediate film to obtain a laminate suitable for a laminated glass having greatly improved penetration resistance and impact resistance. The values of "tan δ" of a PVA layer and an EVA layer have been measured over from low to high temperatures, and subsequently showed a graph illustrated in Fig. 4. The graph has revealed that the PVB layer shows high "tan δ" (i.e., high vibrational absorption property) at room temperature, while the EVA layer shows high "tan δ" (i.e., high vibrational absorption property) at low temperature. The inventor has further studied based on the above-findings, and as a result, found that a laminated glass satisfying the conditions of the thicknesses of the PVB layer and the EVA layer described in the items (8) to (12) has greatly improved penetration resistance and impact resistance.

### Effect of the Invention

The intermediate film for laminated glass of the present invention is a laminate comprising a laminated structure of EVA layer/ PVB layer having excellent transparency, penetration resistance and impact resistance wherein the PVB layer contains a benzophenone compound as an ultraviolet absorber, whereby in the preparation of the intermediate film, there is little occurrence of yellowing.
In more detail, study of the present inventor has revealed that when a benzotriazole ultraviolet absorber, which is generally used in a PVB layer, is used in the above-mentioned intermediate film having the structure of PVB layer /EVA layer, the EVA layer is apt to turn yellow, but the use of a benzophenone compound as ultraviolet absorber extremely improves the yellowing. Hence, the intermediate film of the invention can be prepared under the heat condition for enabling crosslink of EVA without use of an autoclave even though it contains a PVB layer, and further acquires improved transparency, which is kept without turning yellowing. Thus, the intermediate film comprises the structure of EVA layer/ PVB layer having various excellent characteristics, and has enhanced transparency wherein there is little occurrence of yellowing.

The laminated glass obtained using the intermediate film little suffers from yellowing, and further has excellent transparency, adhesion, penetration resistance and impact resistance.

In case the EVA layer and the PVB layer in the laminated glass of the invention satisfy the above-defined thickness ranges, the laminated glass acquires not only excellent transparency, adhesion, penetration resistance and impact resistance but also improved penetration resistance and impact resistance under further sever conditions (low temperature or strong impact), and further has excellent sound insulation. In more detail, the inventor has noted difference between the viscoelasticities of the EVA layer and the PVB layer, and found the combination of the layers that exert synergically the characteristics of the layers, whereby the laminated glass having greatly improved impact resistance and penetration resistance can be obtained.

### Brief Description of the Drawings

Fig. 1 is a section view showing one example of embodiments of the laminated glass according to the present invention.
Fig. 2 is a section view showing one example of preferred embodiments of the laminated glass according to the invention.
Fig. 3 is a section view showing one example of embodiments of the laminated glass according to the invention

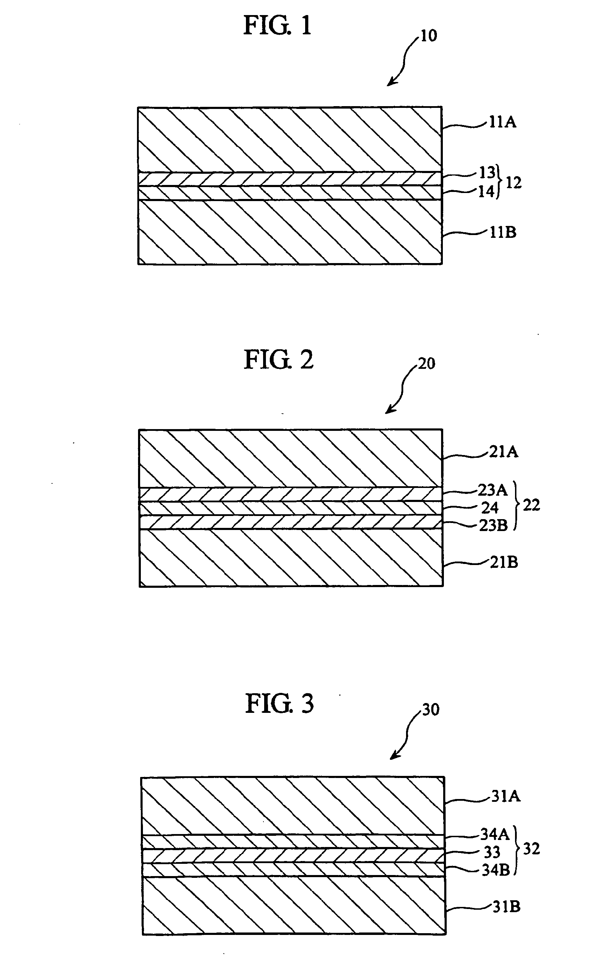

Fig. 2 is a graph showing relationships of "tan δ" of a PVA layer and an EVA to temperature.

### Explanation of Reference Number

10,20,30 Laminate
11A, 11B, 21A, 1B, 31A, 31B Glass plate
12,22,32 Intermediate film
13, 23A, 23B, 33 EVA layer
14, 24, 34A, 34B PVB layer

### Detailed Description of the Invention

The intermediate film for a laminated glass of the invention has a basic structure comprising a laminate consisting of a layer (PVB layer) of a composition comprising polyvinyl butyral and a crosslinked layer (EVA layer) of a composition comprising ethylene/vinyl acetate copolymer containing an organic peroxide. The composition comprising polyvinyl butyral contains a benzophenone compound as an ultraviolet absorber, whereby yellowing of the EVA layer scarcely occurs in the preparation of laminated glass.

The intermediate film for a laminated glass of the invention and the laminated glass of the invention are explained in detail with reference to the drawings.

An example of embodiments of the laminated glass having the intermediate film for a laminated glass of the invention is shown in Fig. 1. The laminated glass 10 is obtained by interposing the intermediate film 12 between two glass plates 11A, 11B, and bonding and uniting them. The intermediate film 12 is a two-layered laminate that an EVA layer 13 and a PVB layer 14 are laminated with each other, and the EVA layer 13 is in contact with the glass plate 11A and the PVB layer 14 in contact with the glass plate 11B. The intermediate film 12 is a two-layered laminate of a PVB layer 14 having excellent transparency, penetration resistance and impact resistance and an EVA layer 13 compensating the disadvantages (humidity resistance, adhesion) of the PVB layer, and therefore has the advantages of both the layers. The EVA layer 13 is a layer obtained by crosslinking EVA. Further, in the intermediate film 12 of the invention, the PVB layer 14 contains a benzophenone compound as an UV-absorber to greatly improve yellowing of the EVA layer in a process for crosslinking the EVA layer. Thus, the intermediate film 12 has the above-mentioned various excellent characteristics, and excellent transparency scarcely free from yellowing.

In the intermediate film 12 of the invention, the PVB layer 14 having excellent transparency, penetration resistance and impact resistance and the EVA layer 13 compensating the disadvantages (humidity resistance, adhesion are laminated with each other, and further preferably satisfies the specific ranges of thicknesses of the EVA layer 13 and PVB layer 14. In more detail, in case the PVB layer 14 has thickness of 0.1mm or more and the EVA layer 13 has thickness of 0.1mm or more, preferably 0.6mm or more, the resultant laminated glass acquires not only excellent transparency, adhesion, penetration resistance and impact resistance but also improved impact resistance and penetration resistance under further sever conditions (low temperature or strong impact), and also has excellent sound insulation. As described above, based on the findings that the PVB layer shows high "tan δ" (i.e., high vibrational absorption property) at room temperature, while the EVA layer shows high "tan δ" (i.e., high vibrational absorption property) at low temperature, the ranges of thicknesses of the layers are set such that the combination of the layers exert synergically the characteristics of the layers.

An example of preferred embodiments of the laminated glass having the intermediate film for a laminated glass of the invention is shown in Fig. 2. The laminated glass 20 is obtained by interposing the intermediate film 22 between two glass plates 21A, 21B, and bonding and uniting them. The intermediate film 22 is a three-layered laminate that an EVA layer 23A, a PVB layer 24 and an EVA layer 23B are laminated with each other, and the EVA 23A is in contact with the glass plate 21A and EVA layer 23B in contact with the glass plate 21B. Both the glass plates 21A, 21B are in contact with the EVA layer to greatly enhance adhesion between the glass plate and the intermediate film and water resistance of the laminated glass, whereby dispersing of glass scatters in destroy of the laminated glass can be greatly controlled and durability also is enhanced.

In the three-layered intermediate film, it is preferred that the PVB layer has thickness of 0.1mm or more and the two EVA layers have totally thickness of 0.1mm or more, preferably 0.6mm or more. Thereby, the resultant laminated glass acquires not only excellent transparency, adhesion, penetration resistance and impact resistance but also improved penetration resistance and impact resistance under further sever conditions (low temperature or strong impact), and also has excellent sound insulation.

An example of preferred embodiments of the laminated glass having the intermediate film for a laminated glass of the invention is shown in Fig. 3. The laminated glass 30 is obtained by interposing the intermediate film 32 between two glass plates 31A, 31B, and bonding and uniting them. The intermediate film 32 is a three-layered laminate that a PVB layer 34A, an EVA layer 33 and a PVB layer 34B are laminated with each other. Both the glass plates 31A, 31B are in contact with the PVB layer to bring about a laminated glass having greatly enhanced transparency.

In the three-layered intermediate film, it is preferred that the two PVB layers have totally thickness of 0.1mm or more and the EVA layer has thickness of 0.1mm or more, preferably 0.6mm or more. Thereby, the resultant laminated glass acquires not only excellent transparency, adhesion, penetration resistance and impact resistance but also improved penetration resistance and impact resistance under further sever conditions (low temperature or strong impact), and also has excellent sound insulation.

In Figs. 1 to 3, one of the glass plates may be a plastic film. Such laminate is occasionally referred to as a film-reinforced glass. Though the two-layered and three-layered structures are shown as examples of the intermediate film, four or more-layered structures may be adopted by using at least one of EVA layer or PVB layer.

. In the intermediate film of the invention, it is preferred that the all PVB layer(s) have totally thickness of 0.1 to 2.0mm, especially 0.1 to 0.6mm. When the total thickness is more than 2.0mm, the intermediate film has much increased thickness so that the resultant laminate becomes bulky and shows reduced transparency. In contrast, when the total thickness is less than 0.1mm, the performance (e.g., high viscoelasticity at room temperature) of the PVB layer is not sufficiently given to the intermediate film.
A total thickness of all the EVA layer(s) is preferably in the range of 0.1 to 1.0mm., especially 0.6 to 1.0mm. When the total thickness is more than 1.0mm, the intermediate film has much increased thickness so that the resultant laminate becomes bulky and shows reduced transparency. In contrast, when the total thickness is less than 0.1mm, the performance (e.g., high viscoelasticity at low temperature, humidity resistance, sound insulation) of the EVA layer is not sufficiently brought about the intermediate film.

A ratio (EVA layer(s)/PBV layer(s)) of the total thickness of all the EVA layer(s) to the total thickness of all the PVB layer(s) generally is in the range of 1 to 6, especially 1 to 4. In a reduced total thickness of the EVA layer and the PVB layer, the ratio can be considered as scale to obtain improved penetration resistance. A total thickness of all the EVA layer(s) and all the PVB layer(s) is in the range of 0.3 to 3.0mm, preferably 0.7 to 1.5mm, especially 0.7 to 1.0mm. The thickness is not bulky but suitable for a laminated glass.

The laminated glass (film-reinforced glass) of the invention replacing one of two glass plates with a plastic film can be designed so as to have appropriate performances such as impact resistance, penetration resistance and transparency, whereby the laminated glass can be used, for example, as a window glass in various vehicles and building, and as a glass in show-window and showcase.
On the other hand, the laminated glass of the invention having glass plates on both sides can be designed so as to have greatly improved impact resistance and penetration resistance, whereby the laminated glass can be used, for example, in various uses including a laminated glass.

The glass plate of the invention generally is silicate glass. In the reinforced glass, the thickness of the glass plate is varied depending on where the reinforced glass of the invention is used. For example, in case the film-reinforced glass is used as a side window or inserted glass of automobile, the glass plate need not have the thickness of windshield and therefore its thickness is generally in the range of 0.1 to 10 mm, preferably 0. 3 to 5 mm. The above-mentioned one glass plate is tempered in heat or chemical resistance.

In the laminated glass of the invention having glass plates on both sides, which is suitable for a windshield of automobile, the thickness of the glass plate generally is in the range of 0.5 to 10mm., preferably 1 to 8mm.

The intermediate film for laminated glass has at least one EVA layer and at least one PVB layer.

A PVB resin composition constituting a PVB layer generally includes PVB resin, a plasticizer, an UV absorber, etc. The PVB resin has preferably 60 to 95 weight % of vinyl acetal unit and 1 to 15 weight % of vinyl acetal unit, and average polymerization degree of 200 to 4,000, preferably 200 to 3,000, especially 300 to 2,500.

Further, the PVB resin composition preferably is polyvinyl butyral comprising a polyvinyl acetal resin (PVB resin) obtained by acetalization of polyvinyl alcohol with (a) aldehyde of 4 to 6 carbon atoms and (b) aldehyde of 1 to 3 carbon atom, and a plasticizer, a total content of (A) vinyl acetal unit derived from the (a) aldehyde and (B) vinyl acetal unit derived from the (b) aldehyde being 60 to 90% by weight based on the whole weight of the polyvinyl acetal resin, and a ratio by weigh (A:B) of the (A) vinyl acetal unit and the (B) vinyl acetal unit being 10-80:90-20.

The PVB layer having the above-mentioned composition shows not only excellent transparency but also reduced temperature-dependence property of penetration resistance, and further exhibits excellent penetration resistance even at increased temperatures of not less than 50°C. Hence, by using the PVB layer having the above-mentioned constitution in an intermediate film for laminated glass having a laminate of an EVA layer and a PVB layer, an intermediate film having improved impact resistance, humidity resistance and sound insulation, and exhibiting penetration resistance independent of temperature and excellent transparency can be obtained.

The PVB resin composition preferably comprises a polyvinyl acetal resin obtained by acetalization of polyvinyl alcohol with (a) aldehyde of 4 to 6 carbon atoms and (b) aldehyde of 1 to 3 carbon atom, and a plasticizer, as mentioned above.

Examples of the (a) aldehyde of 4 to 6 carbon atoms include n-butylaldehyde, tert-butylaldehyde, amylaldehyde, and hexylaldehyde.

Examples of the (b) aldehyde of 1 to 3 carbon atom include formaldehyde, acetoaldehyde and propionlaldehyde.

In each of the (a) and (b) aldehydes, the aldehyde may be used singly or in the combination of two or more kinds.

Any polyvinyl alcohols can be used provided that they are conventionally used in the preparation of polyvinyl acetal resin. The polyvinyl alcohols preferably have an average polymerization degree of 200 to 4,000. The polyvinyl alcohols may be used singly or in the combination of two or more kinds.

The polyvinyl acetal resin (i.e., polyvinyl butyral resin) of the invention composition can be obtained by acetalization of a part or whole of polyvinyl alcohol with (a) aldehyde and (b) aldehyde. The polyvinyl acetal resin generally has (A) a vinyl acetal unit of the following formula (1) derived from the (a) aldehyde and (B) a vinyl acetal unit of the following formula (2) derived from the (b) aldehyde, a vinyl acetate unit of the following formula (3) and a vinyl alcohol unit of the following formula (4).

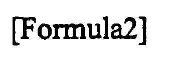

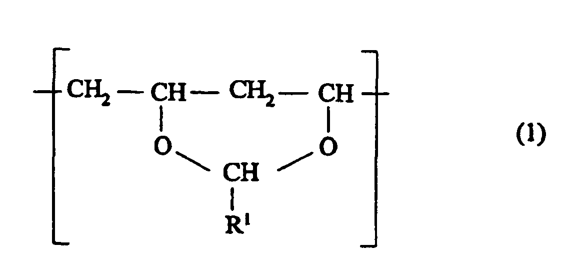

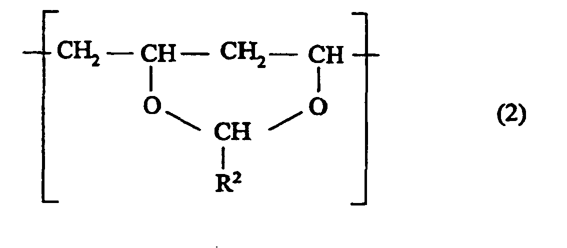

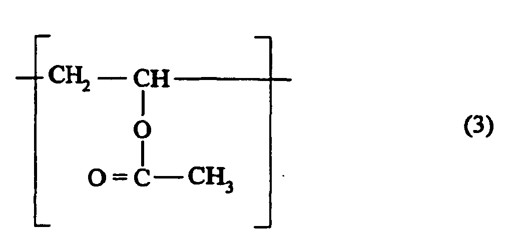

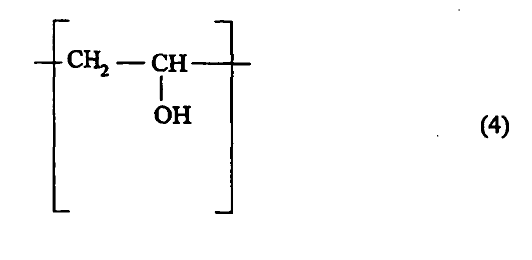

In the formulae, R¹ is an alkyl group having 3 to 5 carbon atoms, and R² is a hydrogen atom or an alkyl group having 1 or 2 carbon atom.
In the polyvinyl acetal resin, a total content of (A) vinyl acetal unit derived from the (a) aldehyde and (B) vinyl acetal unit derived from the (b) aldehyde is preferably 60 to 90% by weight, more preferably 60 to 85% by weight, especially preferably 65 to 75% by weight, based on the whole weight of the polyvinyl acetal resin. The polyvinyl acetal satisfying the content shows excellent compatibility with a plasticizer, and a resin layer formed from the polyvinyl acetal is capable of maintaining sufficient penetration resistance independent of variation of temperature.

Further, a ratio by weigh (A:B) of the (A) vinyl acetal unit and the (B) vinyl acetal unit of the polyvinyl acetal resin is preferably 10-80:90-20, more preferably 10-40:90-60, especially preferably 10-35:90-65. The polyvinyl acetal satisfying the ratio is capable of forming a resin layer having enhanced transparency.

The PVB resin composition contains a benzophenone compound as an ultraviolet (UV) absorber. The benzophenone compound is preferably represented by the following formula (I):

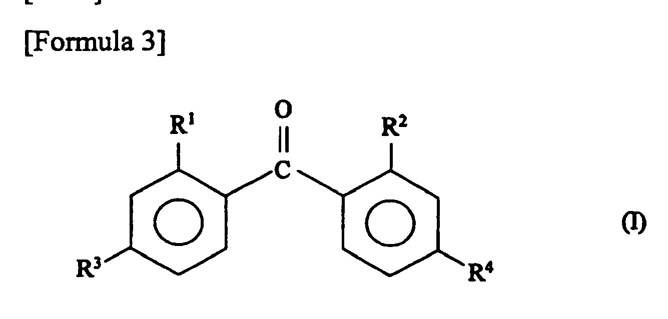

in which R¹ represents a hydroxy group, R² represents a hydrogen atom or a hydroxy group, R³ represents a hydrogen atom, a hydroxy group, an alkyl group of 1 to 14 carbon atoms (especially 1 to 8 carbon atoms) or an alkoxy group of 1 to 14 carbon atoms (especially 1 to 8 carbon atoms), and R⁴ represents a hydrogen atom, a hydroxy group, an alkyl group of 1 to 14 carbon atoms (especially 1 to 8 carbon atoms) or an alkoxy group of 1 to 14 carbon atoms (especially 1 to 8 carbon atoms).

R¹ represents preferably a hydroxy group, R² represents preferably a hydrogen atom or a hydroxy group, R³ represents preferably a hydrogen atom, a hydroxy group, an octyl group or a methoxy group, and R⁴ represents preferably a hydrogen atom, a hydroxy group or a methoxy group. Particularly it is preferred that both of R¹ and R² represent a hydroxy group.

Preferred examples of the benzophenone compound include 2,4-hydroxybenzophenone, 2-hydroxy-4-methoxybenzophenone, 2-hydroxy-4-dodecyoxybenzophenone, 2-hydroxy-4-n-octylbenzophenone, 2,2',4,4'-tetrahydroxybenzophenone, and 2,2'-dihydroxy-4,4'-dimethoxybenzophenone. Particularly preferred are 2-hydroxy-4-n-octylbenzophenone and 2,2'-dihydroxy-4,4'-dimethoxybenzophenone.

In the PVB layer, the benzophenone compound is preferably used in an amount of 0.0 to 3.0 part by weight, preferably 0.01 to 3.0 part by weight, especially 0.1 to 2.0 part by weight based on 100 parts by weight of PVB resin.

If necessary, other UV absorbers may be used in an amount of less than the amount of the benzophenone compound. Examples of other UV absorbers include a triazine compound, a benzoate compound and a hindered amine compound. However, if a benzotriazole compound is contained in the PVB layer, the EVA layer is apt to turn yellow in the crosslinking of the EVA layer. Therefore the benzotriazole compound cannot be used in the invention. The benzotriazole compound means an UV absorber having benzotriazole ring.

Examples of the benzotriazole compounds include 2-(2'-hydroxy-5'-methylphenyl)benzotriazole, 2-(2'-hydroxy-3',5'-di-t-butylphenyl)benzotriazole, 2-(2'-hydroxy-3'-t-butyl-5'-methylphenyl)-5-chlorobenzotriazole, and 2-(2'-hydroxy-3',5'-di-amylphenyl)benzotriazole.

Further, the PVB resin composition contains no alkali metal salt or alkali earth metal salt of fatty acid, which is generally used as adhesion regulator. As the salt of fatty acid, an alkali earth metal salt of fatty acid (preferably fatty acid of 1 to 12 carbon atom), especially magnesium octylate is generally used. The adhesion regulator is apt to form a chelate complex with the benzophenone compound, and therefore combination of both is inclined to cause the layer to turn yellow.

Examples of the alkali earth metal salts of fatty acids include magnesium formate, magnesium acetate, magnesium lactate, magnesium stearate, magnesium octylate, calcium formate, calcium acetate, calcium lactate, calcium stearate, calcium octylate, barium formate, barium acetate, barium lactate, barium stearate and barium octylate; and examples of the alkali metal salts of fatty acids include potassium formate, potassium acetate, potassium lactate, potassium stearate, potassium octylate, sodium formate, sodium acetate, sodium lactate, sodium stearate and sodium octylate.

Examples of the plasticizers of the PVB composition include organic plasticizers such as monobasic acid ester and polybasic acid ester, and plasticizers derived from phosphoric acid.

Examples of the monobasic acid esters preferably include esters obtained by reaction of an organic acid such as butyric acid, isobutyric acid, caproic acid, 2-ethylbutyric acid, heptanoic acid, n-octylic acid, 2-ethylhexylic acid, pelargonic acid (n-nolylic acid) or decylic acid with triethylene glycol, and particularly preferred are triethylene glycol -di-2-ethylbutylate, triethylene glycol-di-2-ethylhexoate, triethylene glycol -di-capronate, triethylene glycol-di-n-octoate. Further esters obtained by reaction of the organic acid with tetraethylene glycol or tripropylene glycol can be also used.

Examples of the polybasic acid ester plasticizers preferably include esters of an organic acid such as adipic acid, sebacic acid or azelaic acid with a linear or branched alcohol of 4 to 8 carbon atoms, and particularly preferred are dibutyl sebacate, dioctyl azelate, dibutylcarbitol adipate.

Examples of the phosphoric acid derived plasticizers include tributoxyethyl phosphate, triisodecylphenyl phosphate, triisopropy phosphate.

In the PVB resin composition, use of a reduced amount of the plasticizer shows poor film-forming property, while use of an increased mount of plasticizer lowers durability under elevated temperature. Therefore the PVB resin composition preferably contains the plasticizer in an amount of 5 to 60 parts by weight, more preferably 5 to 50 parts by weight, especially 10 to 50 parts by weight, particularly 10 to 40 parts by weight based on 100 parts by weight of polyvinyl butyral resin.

The PVB resin composition may further contain additives such as a stabilizer and an antioxidant for keeping the qualities.

In the laminate of the invention, too small thickness of the PVB layer brings about insufficient impact resistance and penetration resistance, whereas too large thickness of the PVB layer lowers transparency. Therefore the above-mentioned thickness ranges are preferred.

In EVA used in the EVA resin composition constituting the EVA layer, the content of vinyl acetate recurring unit preferably is in the range of 23 to 38% by weight, especially 23 to 28% by weight. When the content is less than 23% by weight, the resin cured at high temperature does not show satisfactory transparency. On the other hand, when the content is more than 38 % by weight, the resin is apt not to satisfy impact resistance and penetration resistance required in the glass for prevention of crimes. The ethylene-vinyl acetate copolymer preferably has Melt Flow Index (MFI) of 4.0 to 30.0g/10min., especially 8.0 to 18.0g/10min. Thereby a preliminary pressure bonding becomes easy.

The EVA resin composition includes EVA, an organic peroxide (crosslinker) and an UV absorber, and further can contain various additives such as a crosslinking auxiliary, an adhesion promoter and a plasticizer, if necessary.

The EVA resin composition preferably contains the benzophenone compound as used in the PVB layer. The benzophenone compound of the EVA layer is generally contained in the amount of 0.0 to 5.0 part by weight, preferably 0.05 to 5.0 part by weight, especially 0.5 to 3.0 part by weight based on 100 parts by weight of EVA.

If necessary, other UV absorbers may be used in an amount of less than the amount of the benzophenone compound. Examples of other UV absorbers include a triazine compound, a benzoate compound and a hindered amine compound. However, if a benzotriazole compound is contained in the EVA layer, the EVA layer is apt to turn yellow in the crosslinking of the EVA layer. Therefore the benzotriazole compound cannot be used in the invention.

The EVA resin composition contains no alkali metal salt or alkali earth metal salt of fatty acid, which is generally used as adhesion regulator, and which is generally contained in the PVB resin composition. The adhesion regulator is apt to form a chelate complex with the benzophenone compound, and therefore combination of both is inclined to cause the layer to turn yellow.

In the invention, any materials that can be decomposed at a temperature of not less than 100°C to generate radical(s) can be employed as the organic peroxide. The organic peroxide is selected in the consideration of film-forming temperature, condition for preparing the composition, curing (bonding) temperature, heat resistance of body to be bonded, storage stability. Especially, preferred are those having a decomposition temperature of not less than 70°C in a half-life of 10 hours.

Examples of the organic peroxides include 2,5-dimethylhexane-2,5-dihydroperoxide, 2,5-dimethyl-2,5-(t-butylperoxy)hexane-3-di-t-butylperoxide, t-butylcumyl peroxide, 2,5-dimethyl-2,5-di(t-butylperoxy)hexane, dicumyl peroxide, a,a'-bis(t-butylperoxyisopropyl)benzene, n-butyl-4,4-bis(t-butylperoxy)valerate, 1,1-bis(t-butylperoxy)cyclohexane, 1,1-bis(t-butylperoxy)-3,3,5-trimethylcyclohexane, t-butylperoxybenzoate, benzoyl peroxide, t-butylperoxyacetate, methyl ethyl ketone peroxide, 2,5-dimethylhexyl-2,5-bisperoxybenzoate, t-butyl hydroperoxide, p-menthane hydroperoxide, p-chlorobenzoyl peroxide, hydroxyheptyl peroxide, chlorohexanone peroxide, octanoyl peroxide, decanoyl peroxide, lauroyl peroxide, cumyl peroxyoctoate, succinic acid peroxide, acetyl peroxide, m-toluoyl peroxide, t-butylperoxyisobutylate and 2,4-dichlorobenzoyl peroxide.

The EVA layer preferably contains acryloxy group-containing compounds, methacryloxy group-containing compounds and/or epoxy group-containing compounds for improvement or adjustment of various properties of the layer (e.g., mechanical strength, adhesive property (adhesion), optical characteristics such as transparency, heat resistance, light-resistance, cross-linking rate), particularly for improvement mechanical strength.

Examples of the acryloxy and methacryloxy group containing compounds include generally derivatives of acrylic acid or methacrylic acid, such as esters and amides of acrylic acid or methacrylic acid. Examples of the ester residues include linear alkyl groups (e.g., methyl, ethyl, dodecyl, stearyl and lauryl), a cyclohexyl group, a tetrahydrofurfuryl group, an aminoethyl group, a 2-hydroxyethyl group, a 3-hydroxypropyl group, 3-chloro-2-hydroxypropyl group. Further, the esters include esters of acrylic acid or methacrylic acid with polyhydric alcohol such as ethylene glycol, triethylene glycol, polypropylene glycol, polyethylene glycol, trimethylol propane or pentaerythritol.

Example of the amide includes diacetone acrylamide.

Examples of polyfunctional compounds (crosslinking auxiliaries) include esters of plural acrylic acids or methacrylic acids with polyhydric alcohol such as glycerol, trimethylol propane or pentaerythritol; and further triallyl cyanurate and triallyl isocyanurate.

Examples of the epoxy group containing compounds include triglycidyl tris(2-hydroxyethyl)isocyanurate, neopentylglycol diglycidyl ether, 1,6-hexanediol diglycidyl ether, allyl glycidyl ether, 2-ethylhexyl glycidyl ether, phenyl glycidyl ether, phenol(ethyleneoxy)₅glycidyl ether, p-tert-butylphenyl glycidyl ether, diglycidyl adipate, diglycidyl phthalate, glycidyl methacrylate and butyl glycidyl ether.

In the invention, a silane coupling agent can be used for enhancing the adhesive strength between the EVA layer and the glass plate or plastic film.

Examples of the silane coupling agents include γ-chloropropylmethoxysilane, vinyltriethoxysilane, vinyl-tris(β-methoxyethoxy)silane, γ-methacryloxypropylmethoxysilane, vinyltriacetoxysilane, γ-glycidoxypropyltrimethoxysilane, γ-glycidoxypropyltriethoxysilane, β-(3,4-epoxycyclohexyl)ethyltrimethoxysilane, vinyltrichlorosilane, γ-mercaptopropylmethoxysilane, γ-aminopropyltriethoxysilane, N-β-(aminoethyl)-γ-aminopropyltrimethoxysilane. The silane coupling agents can be used singly, or in combination of two or more kinds. The content of the silane coupling agent is preferably in an amount of not more than 5 weight by part based on 100 parts by weight of EVA.

As the plasticizer, polybasic acid esters and polyhydric alcohol esters are generally employed although the plasticizer can be used without any restriction. Examples of the esters include dioctyl phthalate, dihexy-ladipate, triethylene glycol-di-2-ethylbutylate, butyl sebacate, tetraethylene glycol heptanoate and triethylene glycol dipelargonate. The plasticizer can be used singly, or in combination of two or more kinds. The content of the plasticizer is generally in an amount of not more than 5 parts by weight based on 100 parts by weight of EVA.

Too small thickness of the EVA layer brings about insufficient humidity resistance and sound insulation, whereas too large thickness of the EVA layer lowers transparency due to bulky laminate. Therefore the above-mentioned thickness ranges are preferred.

The EVA layer of the invention can be prepared, for example, by subjecting a composition including EVA, an organic peroxide, an UV absorber, etc., to a conventional molding process such as extrusion molding or calendaring to form a sheet-shaped material. Further the PVB layer of the invention can be similarly prepared, for example, by subjecting a composition including PVB, an UV absorber, etc., to a conventional molding process such as extrusion molding or calendaring to form a sheet-shaped material.

Otherwise, the sheet-shaped material can be also obtained by dissolving the composition in a solvent to form a solution and coating and drying the solution on an appropriate support by means of an appropriate coater to form a coated layer.

Though the PVB layer and EVA layer are formed as a resin film respectively, a PVB and EVA composite resin film may be formed by coextrusion of PVB and EVA resins. Further one composition may be coated on the resin film of the other composition, for example, the EVA composition may be coated on the resin film of the PVB composition by means of an appropriate coater to form a two-layered film. A three-layered intermediate film can be also formed in the same manner as above.

The laminated glass of the invention can be prepared by preparing a PVB resin film and an EVA resin film, interposing a laminate of a desired number of the PVB resin film and EVA resin film between two glass plates, and degassing the composite laminate and then pressing the composite laminate under heating to be integrated. The composite laminate can be obtained, for example, by vacuum package system or nip rollers system. The composite laminate can be prepared by pressure bonding according to the nip rollers system because of softness of EVA film, whereby the composite laminate can be easily prepared. The temperature of the nip rollers is preferably in the range of 70 to 130°C. In the laminate (especially a structure of EVA/PVB/EVA layers), the amount of residual air in the laminate can be reduced to enable omission of a defoaming process such as heating/pressing treatment by autoclave.

In the preparation of the laminated glass (composite laminate), the EVA layer is generally crosslinked by heating at 100 to 150°C (especially approx. 130°C) for 10 minutes to one hour. The above crosslinking is carried out by degassing the laminate inserted between two glass plates, and preliminarily bonding them to each other, for example, under pressure at 80 to 120°C, and then heating them at 100 to 150°C (especially approx. 130°C) for 10 minutes to one hour. The crosslinked laminate is generally cooled at room temperature. The cooling is preferably conducted rapidly.

As described above, one of glass plates of the laminated glass may be substituted with a plastic film whereby a film-reinforced glass can be obtained. Examples of the plastic films used in the invention include polyethylene terephthalate (PET) film, polyethylene naphthalate (PEN) film or polyethylene butyrate film. Especially preferred is PET film.

A hard coat layer can be provided on the plastic film to enhance scratch resistance of surface. As a resin for forming the hard coat layer, UV (ultraviolet) curable resin or thermosetting resin can be generally employed. The thickness of the hard coat layer is generally in the range of 1 to 50µm, preferably 3 to 20µm.

Known UV (ultraviolet) curable resin can be employed in the invention. Further, any low molecular and polyfunctional resins suitable for forming a hard coat layer are usable without restriction. Examples of materials for the UV curable resin include oligomers such as urethane oligomer, polyester oligomer and epoxy oligomer which have plural ethylenically double bonds; and mono- or poly-functional oligomers (monomers) such as pentaerythritol tetraacrylate (PETA), pentaerythritol tetramethacrylate and dipentaerythritol hexaacrylate (DPEHA). The UV curable resin generally consists of oligomer, photoinitiator and if necessary reactive diluent (monomer), and further various additives can be used. Examples of the reactive diluents include those mentioned in acryloxy group-containing compounds, methacryloxy group-containing compounds and/or epoxy group-containing compounds used as materials of the intermediate film. Known photoinitiators are can be used in the invention.

The oligomers, reactive diluents and photoinitiators can be each used singly, or in combination of two or more kinds. The content of the diluent is preferably in an amount of 0.1 to 10 part by weight, particularly 0.5 to 5 parts by weight based on 100 parts by weight of UV curable resin. The content of the photoinitiator is preferably in an amount of not more than 5 parts by weight based on 100 parts by weight of UV curable resin.

Examples of the thermosetting resin include reactive acrylic resin, melamine resin, epoxy resin. The above-mentioned UV curable resin can be used as thermosetting resin.

In case a hard coat layer is formed by using UV curable resin, UV curable resin itself or a solution having an appropriate resin concentration obtained by diluting UV curable resin with a solvent is coated on an appropriate film by an appropriate coater, and if desired the coated layer is dried, and then the coated layer is exposed to a UV rays of a UV lamp directly or through a strippable sheet for a few seconds to a few minutes to form a hard coat layer. If necessary, after degassing under vacuum the coated layer is exposed. Examples of the UV lamp include high-pressure, medium-pressure and low-pressure mercury lamps, and a dium-pressure and low-pressure mercury lamps, and a metal halide lamp.

In case a hard coat layer is formed by using thermosetting resin, a solution of thermosetting resin in a solvent is coated on an appropriate film by an appropriate coater, and if desired a strippable sheet is provided on the coated layer, and then the coated layer is, after degassing by a laminator, cured by heating and heat-bonded under pressure. When the strippable sheet is not used, it is preferred that before heat-bonding, the coated layer is dried for approx. 60 seconds to vaporize the solvent until the coated layer comes to be tacky free. When the strippable sheet is used, too, it is preferred that the coated layer is dried a little and then the strippable sheet is provided.

A transparent conductive layer comprising metal and/or metal oxide may be formed on a surface of the glass plate of the laminated glass of the invention.

A barrier layer can be formed on the side face of the resultant laminated glass. The barrier layer has generally a thickness of 0.1 to 20µm, preferably 1 to 10µm.

The resultant laminated glass of the invention can be employed inr the following uses: an inserted glass, a side window (door glass) and a rear glass in an automobile; a door glass of a door leaf for passenger to go in or out, a door glass for chamber, and a window glass in a railway vehicle (e.g., corridor train, express train, special train, sleeping car); a window glass and a door glass in constructions such as building; a showcase for display; and a glass of show window. The laminated glass is preferably employed as a side window, inserted glass for side window and rear glass in an automobile, and a window glass in a railway vehicle, especially as a side window and inserted glass for a door glass in an automobile.

The invention is illustrated in detail using the following Examples.

### EXAMPLE

### [Example 1]

Raw materials having the following formulation were processed by calendaring process to prepare a PVB sheet and an EVA sheet (thickness: 400µm). The raw materials were kneaded at 80°C for 15 minutes, and the calendar rolls had a temperature of 80°C and the processing rate was 5m/min.

| | |
|---|---|
| (Formulation for forming PVB sheet (parts by weight)) | |
| PVB resin (acetalization degree: 66 mol %): | 100 |
| Plasticizer (triethylene glycol di(2-ethylbutylate)): | 33 |
| UV absorber | |
| (2,2'-dihydroxy-4,4'-dimethoxybenzophenone) : | 0.15 |

| | |
|---|---|
| (Formulation for forming EVA sheet (parts by weight)) | |
| EVA resin (content of vinyl acetate: 26 wt. %): | 100 |
| Crosslinker | |
| (1,1-bis(t-butylperoxy)-3,3,5-trimethylcyclohexane): | 2.0 |
| Silane coupling agent | |
| (γ-methacryloxypropyl trimethoxy silane): | 0.5 |
| Crosslinking auxiliary (triallyl isocyanurate) : | 2.0 |
| UV absorber | |
| (2,2'-dihydroxy-4,4'-dimethoxybenzophenone): | 0.15 |

Two silicate glass plates having thickness of 5 mm, which was preliminarily washed and dried, were prepared as glass plates.

A laminate of EVA sheet/PVB sheet/EVA sheet obtained above was inserted between the two glass plates, and the glass plates having the laminate was preliminary bonded at 110°C by nip rollers. The preliminary bonded glasses was introduced into an oven and heated at 130°C for 30 minutes, and then cooled such that the atmosphere temperature is dropped at rate of 20°C/min. to prepare a laminated glass (see Fig. 2) of the invention.

### [Reference Example 1]

The procedures of Example 1 were repeated except for adding 0.001 weight parts of magnesium octylate (adhesion regulator) to the formulation for forming PVB sheet to prepare a laminated glass.

### [Reference Example 2]

The procedures of Example 1 were repeated except for using 2-(3'-t-butyl-2'-hydroxy-5'-methylphenyl)-5-chlorobenzotriazole instead of 2,2'-dihydroxy-4,4'-dimethoxybenzophenone in the same amount as UV absorber of the formulation for forming EVA sheet to prepare a laminated glass.

### [Reference Example 3]

The procedures of Example 1 were repeated except for using 2-(3'-t-butyl-2'-hydroxy-5'-methylphenyl)-5-chlorobenzotriazole instead of 2,2'-dihydroxy-4,4'-dimethoxybenzophenone in the same amount as UV absorber of the formulation for forming PVB sheet to prepare a laminated glass.

### <Evaluation on laminate glass >

### (1) Yellowing

The resultant laminated glasses are left to stand under conditions according to JIS C 8917 (temperature: 63°C, relative humidity: 53%, and UV light irradiation: 1,000W/m²) and differences (ΔYI value) of the YI values before and after leaving the laminated glasses to stand are determined by using SM Color Computer (available from SUGA TEST INSTRUMENTS CO., LTD.).

### (2) UV absorption property

The light transmissions of the resultant laminated glasses at 380nm are determined by using a spectrophotometer (U-4000, available from Hitachi, Ltd.)

The determined results are set forth below.

[Table 1]

**Table 1**

| | Ex. 1 | Ref. Ex. 1 | Ref. Ex. 2 | Ref. Ex. 3 |
|---|---|---|---|---|
| (1) Yellowing YI value | 0.6 | 3.4 | 9.9 | 7.6 |
| (2) UV light transmission (380 nm) | 2.6% | 5.5% | 2.8% | 2.7% |

As apparent from the above result, the laminated glass of Example 1 according to the invention is excellent in yellowing and UV absorption property, and hence has enhanced transparency and durability. The laminated glasses of Reference Examples show increased yellowing to have insufficient transparency.

### [Relative Examples 1 to 6 and Examples 2 to 4]

Raw materials having the following formulations were processed by calendaring process to prepare PVB sheets and EVA sheets (thickness: described in Table 2). The raw materials were kneaded at 80°C for 15 minutes, and the calendar rolls used in the calendaring process had a temperature of 80°C and the processing rate was 5m/min.

| | |
|---|---|
| (Formulation for forming PVB sheet (parts by weight)) | |
| PVB resin (acetalization degree: 66 mol %): | 100 |
| Plasticizer (triethylene glycol di(2-ethylbutylate)): | 33 |
| UV absorber | |
| (2,2'-dihydroxy-4,4'-dimethoxybenzophenone): | 0.15 |

| | |
|---|---|
| (Formulation for forming EVA sheet (parts by weight)) | |
| EVA resin (content of vinyl acetate: 26 wt. %): | 100 |
| Crosslinker | |
| (1,1-bis(t-butylperoxy)-3,3,5-trimethylcyclohexane) : | 2.0 |
| Silane coupling agent | |
| (γ-methacryloxypropyl trimethoxy silane): | 0.5 |
| Crosslinking auxiliary (triallyl isocyanurate) : | 2.0 |
| UV absorber | |
| (2,2'-dihydrxy-4,4'-dimethoxybenzophenone): | 0.15 |

Two silicate glass plates having thickness of 5 mm, which was preliminarily washed and dried, were prepared as glass plates.

A laminate of EVA sheet/PVB sheet prepared by using the EVA sheets and PVB sheets obtained above was inserted between the two glass plates, and the glass plates having the laminate was preliminary bonded at 110°C by nip rollers. The preliminary bonded glasses was introduced into an oven and heated at 130°C for 30 minutes, and then cooled such that the atmosphere temperature is dropped at rate of 20°C/min. to prepare a laminated glass (see Fig. 2) of the invention.

### [Comparative Example 7]

The procedures of Example 2 were repeated except for using only a PVB sheet having thickness of 0.8mm to prepare a laminated glass.

### <Evaluation on laminated glass>

### (Penetration resistance)

One glass plate of the laminated glass is stroked with an impact according to JIS R 3211 (1998) to determine the impact resistance as follows.
○: laminated glass was not penetrated by the impact
×: laminated glass was penetrated by the impact

The test of the penetration resistance is carried out at 25°C (room temperature) and -5°C (low temperature).

### (Sound insulation)

Sound transmission loss of the laminated glass is determined according to JIS A 1416 (2000) as to sound of 3,000 to 5,000Hz.

The determined results are set forth below.

[Table 2]

**Table 2**

| Example, Comparative Example, (EVA thickness/ PVB thickness (mm)) | Penetration Resistance (25°C) | Penetration Resistance. (-5°C) | Sound Insulation |
|---|---|---|---|
| Co. Ex. 1 (0.2/0.2) | × | × | ○ |
| Co. Ex. 2 (0.2/0.4) | × | × | ○ |
| Co. Ex. 3 (0.2/0.6) | ○ | × | ○ |
| Co. Ex. 4 (0.4/0.2) | × | × | ○ |
| Co. Ex. 5 (0.4/0.4) | × | × | ○ |
| Co. Ex. 6 (0.4/0.6) | ○ | × | ○ |
| Ex. 2 (0.8/0.2) | ○ | ○ | ○ |
| Ex. 3 (0.8/0.4) | ○ | ○ | ○ |
| Ex. 4 (0.8/0.6) | ○ | ○ | ○ |
| Co. Ex. 7 (-- /0.8) | ○ | ○ | × |

As apparent from the above result, the laminated glass of Examples 2-4 according to the invention show excellent penetration resistance at room temperature and low temperature, and good sound insulation.

### [Example 5]

### 1. Preparation of EVA layer (1)

The EVA layer (1) was prepared as follows: Compounds having the following formulation were sufficiently mixed by roll mill at approx. 80°C to prepare an EVA composition. The EVA composition was interposed between two polyethylene terephthalate films having thickness posed between two polyethylene terephthalate films having thickness of 0.1mm and press molded by a press molding machine under the conditions of 90°C and 10MPa. The molded product was allowed to stand to room temperature, and then the polyethylene terephthalate films were peeled from the molded product to prepare an EVA layer (1) having thickness of 0.2mm and size of 50mm×50mm.

| | |
|---|---|
| (Formulation for forming EVA sheet (parts by weight)) | |
| (1) EVA resin (content of vinyl acetate: 26 wt. % | |
| based on 100 parts by weight of EVA): | 100 |
| (2) Organic peroxide | |
| (tert-butylperoxy-2-ethylhexyl monocarbonate): | 2.5 |
| (3) Crosslinking auxiliary (triallyl isocyanurate): | 2.0 |
| (4) Silane coupling agent | |
| (γ-methacryloxypropyl trimethoxy silane): | 0.5 |
| (5) UV absorber | |
| (2,2'-dihydroxy-4,4'-dimethoxybenzophenone): | 0.15 |

### 2. Preparation of PVB layer (2)

The PVB layer (2) was prepared as follows: Compounds having the following formulation were sufficiently mixed by roll mill at approx. 80°C to prepare an PVB composition. The PVB composition was interposed between two polyethylene terephthalate films having thickness of 0.1mm and press molded by a press molding machine under the conditions of 120°C and 10MPa. The molded product was allowed to stand to room temperature, and then the polyethylene terephthalate films were peeled from the molded product to prepare an PVB layer (2) having thickness of 0.76mm and size of 50mm×50mm..

| (Formulation for forming PVB sheet (parts by weight)) | |
|---|---|
| (1) PVB resin | |
| (average polymerization degree: | 1750, |
| total acetalization degree: | 83 mol %, |
| acetalization degree derived from acetoaldehyde: | 26 mol %, |
| acetalization degree derived from butylaldehyde: | 57mol %) |
| : | 100 |
| (2) Plasticizer (triethylene glycol di(2-ethylbutylate)): | 35 |
| (3) Antioxidant | |
| (1,3,5-trimethyl-2,4,6-tris(3',5'-di-tert-butyl-4-hydroxybenzyl) | |
| benzene; ADK STAB A-330, | |
| available from ADEKA Corporation): | 0.5 |
| (4) UV absorber | |
| (2,2'-dihydroxy-4,4'-dimethoxybenzophenone): | 0.15 |

### 3. Preparation of laminated glass

EVA layers (1) and PVB layer (2) obtained above were superposed with each other so as to form a laminate of EVA layer (1)/PVB layer (2)/EVA layer (1). The laminate was inserted between the two glass plates (thickness: 2.5mm), and the glass plates having the laminate was put into a rubber case to be degassed in a vacuum and then preliminary bonded at 110°C under pressure. The preliminary bonded glasses was introduced into an autoclave and pressure treated under the conditions of 140°C and 1MPa for 30 minutes to prepare a laminated glass having size of 50mm×50mm.

### [Comparative Example 8]

The procedures of Example 5 were repeated except for using the following PVB resin in the preparation of PVB layer (2) to prepare a laminated glass.

### PVB resin

(average polymerization degree: 1750,
total acetalization degree: 80 mol %,
acetalization degree derived from acetoaldehyde: 0 mol %,
acetalization degree derived from butylaldehyde: 80mol %)

### <Evaluation on laminated glass>

Each of the resultant laminated glasses is evaluated as follows. The results are set forth Table 3.

### 1. Haze

Haze values of three test pieces of each Example are measured by using Color Computer SM-5 (available from Suga Test Instruments Co., Ltd.). The mean value of the three test pieces is reported as haze.

### 2. Light transmittance

Light transmittance of each Example is measured in the direction of the thickness by using a full-automatic and direst-readying type Haze Com-Computer HGM-2DP (available from Suga Test Instruments Co., Ltd.). The mean value of the three measured values is reported as light transmittance.

### 5 3. Penetration resistance

Falling ball test of JIS R 3201 (1998) is carried out under the conditions of height of 4m and at temperatures of 23°C, 40°C and 60°C to determine the impact resistance as follows.
○: the ball did not penetrate laminated glass
×: the ball penetrated laminated glass

**Table 3**

| | Haze (%) | Light transmittance (%) | Penetration resistance | | |
|---|---|---|---|---|---|
| | | | 23°C | 40°C | 60°C |
| Example 5 | 0.2 | 0.7 | ○ | ○ | ○ |
| Co. Example 8 | 0.5 | 0.8 | ○ | ○ | × |

### Industrial Applicability

The use of the intermediate film of the invention brings about a laminated glass which shows excellent transparency, adhesion, impact resistance and penetration resistance as well as excellent light resistance and weather resistance, and scarcely turning yellow in a heating treatment during its preparation, and which is used in an automobile, a railway vehicle, a building and a showcase.

## Claims

1. An intermediate film for a laminated glass comprising a laminate consisting of a layer (PVB layer) of a composition comprising polyvinyl butyral and a crosslinked layer (EVA layer) of a composition comprising ethylene/vinyl acetate copolymer containing an organic peroxide,
**characterised in that** the composition comprising polyvinyl butyral contains a benzophenone compound as an ultraviolet absorber, and the composition comprising polyvinyl butyral and the composition comprising ethylene/vinyl acetate copolymer contain no alkali metal salt or alkali earth metal salt of fatty acid.

2. An intermediate film as defined in claim 1, which is a three or more layered laminate that at least one PVB, layer and at least one EVA layer are alternately superposed on each other.

3. An intermediate films as defined in claim 1 or 2, which is a three layered laminate that an EVA layer is superposed on the other side of the PVB layer.

4. An intermediate film as defined in claim 1 or 2, which is a three layered laminate that the PVB layer, the EVA layer and a PVB layer are superposed on each other in this order.

5. An intermediate film as defined in any of claims 1 to 4, wherein the composition comprising polyvinyl butyral and the composition comprising ethylene/vinyl acetate copolymer contain no benzotriazole compound a benzophenone compound as an ultraviolet absorber.

6. An intermediate film as defined in any of claims 1 to 5, wherein the composition comprising ethylene/vinyl acetate copolymer contains a benzophenone compound as an ultraviolet absorber.

7. An intermediate film as defined in any of claims 1 to 6, wherein the benzophenone compound is a compound represented by the following formula (I): 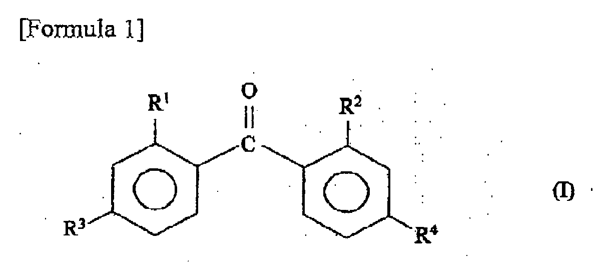 in which R¹ represents a hydroxy group, R² represents a hydrogen atom or a hydroxy group, R³ represents a hydrogen atom, a hydroxy group, an alkyl group of 1 to 14 carbon atoms or an alkoxy group of 1 to 14 carbon atoms, and R⁴ represents a hydrogen atom, a hydroxy group, an alkyl group of 1 to 14 carbon atoms or an alkoxy group of 1 to 14 carbon atoms.

8. An intermediate film as defined in any of claims 1 to 7, wherein the PVB layer has a thickness of not less than 0.1mm, and the EVA layer has a thickness of not less than 0.1mm.

9. An intermediate film as defined in any of claims 1 to 8, wherein a total thickness of all the PVB layer(s) is in the range of 0.1 to 2.0mm,

10. An intermediate film as defined in any of claims 1 to 9, wherein a total thickness of all the EVA layer(s) is in the range of 0.1 to 1.0mm.

11. An intermediate film as defined in any of claims 1 to 10, wherein a ratio (EVA layer(s)/PBV layer(s)) of the total thickness of all the EVA layer(s) to the total thickness of all the PVB layer(s) is in the range of 1 to 6.

12. An intermediate films as defined in any of claims 1 to 11, wherein a total thickness of all the EVA layer(s) and all the PVB layer(s) is in the range of 0.3 to 3.0mm.

13. An intermediate film as defined in any of claims 1 to 12, wherein a total thickness of all the EVA layer(s) and all the PVB layer(s) is in the range of 0.7 to 1.0mm.

14. An intermediate film as defined in any of claims 1 to 13, wherein the amount of a vinyl acetate recurring unit of the ethylene-vinyl acetate copolymer is in the range of 23 to 38% by weight based on 100 parts by weight of the ethylene-vinyl acetate copolymer.

15. An intermediate film as defined in any of claims 1 to 14, wherein the ethylene-vinyl acetate copolymer has Melt Flow Index (MFI) of 1.5 to 30.0g/10min.

16. An intermediate film as defined in any of claims 1 to 15, wherein the composition comprising polyvinyl butyral contains a benzophenone compound in an amount of 0.01 to 3.0 part by weight based on 1.00 parts by weight of polyvinyl butyral.

17. An intermediate film as defined in any of claims 1 to 16, wherein the ethylene-vinyl acetate copolymer contains the organic peroxide in an amount of 0.05 to 5.0 part by weight based on 100 parts by weight of ethylene-vinyl acetate copolymer.

18. An intermediate film as defined in any of claims 1 to 17, wherein the composition comprising polyvinyl butyral comprises a polyvinyl acetal resin obtained by acetalization of polyvinyl alcohol with (a) aldehyde of 4 to 6 carbon atoms and (b) aldehyde of 1 to 3 carbon atom, and a plasticizer,
a total content of (A) vinyl acetal unit derived from the (a) aldehyde and (B) vinyl acetal unit derived from the (b) aldehyde being 60 to 90% by weight based on the whole weight of the polyvinyl acetal resin, and a ratio by weigh (A:B) of the (A) vinyl acetal unit and the (B) vinyl acetal unit being 10-80:90-20.

19. A laminated glass comprising two transparent substrates and the intermediate film as defined in any of claims 1 to 18 provided therebetween, the transparent substrates and the intermediate film being integrated by bonding them with each other.

20. A laminated glass comprising as defined in claim 19, wherein both the two transparent substrates are glass plates.

21. A laminated glass comprising as defined in claim 19, wherein one of the two transparent substrates is a glass plate and the other is a plastic film.

22. A laminated glass comprising as defined in claim 19, wherein both the two transparent substrates are plastic films.

23. A process for the preparation of a laminated glass comprising:
passing the intermediate film as defined in any of claims 1 to 18 interposed between two transparent substrates through nip rollers, and pressing and laminating them to form a laminate, and then crosslinking the laminate by heating.

24. A process for the preparation of a laminated glass as defined in claim 23, wherein the nip rollers have temperature of 70 to 130°C.

25. A process for the preparation of a laminated glass as defined in claim 23 or 24, wherein a heating and pressing treatment is not carried out before passing the intermediate film through the nip roller.

## Patentansprüche

1. Zwischenfolie für ein laminiertes Glas umfassend ein Laminat, das aus einer Schicht (PVB-Schicht) einer Zusammensetzung, die Polyvinylbutyral umfasst, und einer vernetzten Schicht (EVA-Schicht) einer Zusammensetzung, die Ethylen/Vinylacetat-Copolymer umfasst, das ein organisches Peroxid enthält, besteht,
**dadurch gekennzeichnet, dass** die Zusammensetzung, die Polyvinylbutyral umfasst, eine Benzophenonverbindung als Ultraviolettabsorber enthält und die Zusammensetzung, die Polyvinylbutyral und die Zusammensetzung, die Ethylen-Vinylacetat-Copolymer umfasst, kein Alkalimetallsalz oder Erdalkalimetallsalz von Fettsäure enthält.

2. Zwischenfolie nach Anspruch 1, die ein drei- oder mehrschichtiges Laminat ist, bei dem mindestens eine PVB-Schicht und mindestens eine EVA-Schicht abwechseln aufeinander aufgelegt sind.

3. Zwischenfolie nach Anspruch 1 oder 2, die ein dreischichtiges Laminat ist, bei dem eine EVA-Schicht auf die andere Seite der PVB-Schicht aufgelegt ist.

4. Zwischenfolie nach Anspruch 1 oder 2, die ein dreischichtiges Laminat ist, bei dem die PVB-Schicht, die EVA-Schicht und eine PVB-Schicht in dieser Reihenfolge aufeinander aufgelegt sind.

5. Zwischenfolie nach einem der Ansprüche 1 bis 4, wobei die Zusammensetzung, die Polyvinylbutyral umfasst, und die Zusammensetzung, die Ethylen-Vinylacetat-Copolymer umfasst, keine Benzotriazolverbindung und eine Benzophenonverbindung als Ultraviolettabsober enthält.

6. Zwischenfolie nach einem der Ansprüche 1 bis 5, wobei die Zusammensetzung, die Ethylen-Vinylacetat-Copolymer umfasst, eine Benzophenonverbindung als Ultraviolettabsorber enthält.

7. Zwischenfolie nach einem der Ansprüche 1 bis 6, wobei die Benzophenonverbindung eine Verbindung ist, die durch die folgend Formel (I): 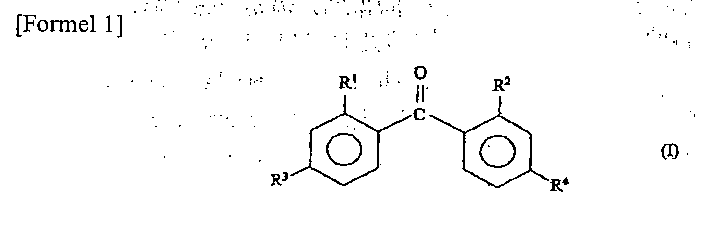 dargestellt ist
wobei R¹ eine Hydroxygruppe darstellt, R² ein Wasserstoffatom oder eine Hydroxygruppe darstellt, R³ ein Wasserstoffatom, eine Hydroxygruppe, eine Alkylgruppe von 1 bis 4 Kohlenstoffatomen oder eine Alkoxygruppe von 1 bis 14 Kohlenstoffatomen darstellt und R⁴ ein Wasserstoffatom, eine Hydroxygruppe, eine Alkylgruppe von 1 bis 14 Kohlenstoffatomen oder eine Alkoxygruppe von 1 bis 14 Kohlenstoffatomen darstellt.

8. Zwischenfolie nach einem der Ansprüche 1 bis 7, wobei die PVB-Schicht eine Dicke von nicht weniger als 0,1 mm aufweist und die EVA-Schicht eine Dicke von nicht weniger als 0,1 mm aufweist.

9. Zwischenfolie nach einem der Ansprüche 1 bis 8, wobei eine Gesamtdicke der gesamten PVB-Schicht(en) im Bereich von 0,1 bis 2,0 mm liegt.

10. Zwischenfolie nach einem der Ansprüche 1 bis 9, wobei eine Gesamtdicke der gesamten EVA-Schicht(en) im Bereich von 0,1 bis 1,0 mm liegt.

11. Zwischenfolie nach einem der Ansprüche 1 bis 10, wobei das Verhältnis von (EVA-Schicht(en)/PVB-Schicht(en) der Gesamtdicke der gesamten EVA-Schicht(en) zu der Gesamtdicke der gesamten PVB-Schicht(en) im Bereich von 1 zu 6 liegt.

12. Zwischenfolie nach einem der Ansprüche 1 bis 11, wobei eine Gesamtdicke der gesamten EVA-Schicht(en) und der gesamten PVB-Schicht(en) im Bereich von 0,3 bis 3,0 mm liegt.

13. Zwischenfolie nach einem der Ansprüche 1 bis 12, wobei eine Gesamtdicke der gesamten EVA-Schicht(en) und der gesamten PVB-Schicht(en) im Bereich von 0,7 bis 1,0 mm liegt.

14. Zwischenfolie nach einem der Ansprüche 1 bis 13, wobei die Menge einer Vinylacetatwiederholungseinheit des Ethylen-Vinylacetat-Copolymers im Bereich von 23 bis 38 Gew.-%, auf 100 Gewichtsteile des Ethylen-Vinylacetat-Copolymers bezogen, liegt.

15. Zwischenfolie nach einem der Ansprüche 1 bis 14, wobei das Ethylen-Vinylacetat-Copolymer einen Schmelzflussindex (MFI) von 1,5 bis 30,0 g/10 min aufweist.

16. Zwischenfolie nach einem der Ansprüche 1 bis 15, wobei die Zusammensetzung, die Polyvinylbutyral umfasst, eine Benzophenonverbindung in einer Menge von 0,01 bis 3,0 Gewichtsteilen, auf 100 Gewichtsteile Polyvinylbutyral bezogen, enthält.

17. Zwischenfolie nach einem der Ansprüche 1 bis 16, wobei das Ethylen-Vinylacetat-Copolymer das organische Peroxid in einer Menge von 0,05 bis 5,0 Gewichtsteilen, auf 100 Gewichtsteile Ethylen-Vinylacetat-Copolymer bezogen, enthält.

18. Zwischenfolie nach einem der Ansprüche 1 bis 17, wobei die Zusammensetzung, die Polyvinylbutyral umfasst, ein Polyvinylacetalharz, das durch Acetalisierung von Polyvinylalkohol mit (a) einem Aldehyd von 4 bis 6 Kohlenstoffatomen und (b) einem Aldehyd von 1 bis 3 Kohlenstoffatomen erhalten wird, und einen Weichmacher umfasst,
wobei ein Gesamtgehalt an Vinylacetaleinheiten (A), die von dem Aldehyd (a) abgeleitet sind, und an Vinylacetaleinheiten (B), die von dem Aldehyd (b) abgeleitet sind, 60 bis 90 Gew.-%, auf das ganze Gewicht des Polyvinylacetalharzes bezogen, beträgt und ein Gewichtsverhältnis (A:B) der Vinylacetaleinheit (A) und der Vinylacetaleinheit (B) 10-80:90-20 beträgt.

19. Laminiertes Glas umfassend zwei transparente Substrate und die dazwischen bereitgestellte Zwischenfolie nach einem der Ansprüche 1 bis 18, wobei die transparenten Substrate und die Zwischenfolie durch Bondieren derselben miteinander integriert sind.

20. Laminiertes Glas umfassend die in Anspruch 19 angegebene Definition, wobei die beiden transparenten Substrate Glasplatten sind.

21. Laminiertes Glas umfassend die in Anspruch 19 angegebene Definition, wobei eines der beiden transparenten Substrate eine Glasplatte und das andere eine Kunststofffolie ist.

22. Laminiertes Glas umfassend die in Anspruch 19 angegebene Definition, wobei die beiden transparenten Substrate Kunststofffolien sind.

23. Verfahren zur Herstellung eines laminierten Glases, umfassend:
das Hindurchführen der Zwischenfolie nach einem der Ansprüche 1 bis 18, die zwischen zwei transparenten Substraten eingelegt ist, durch Abquetschwalzen und das Pressen und Laminieren derselben unter Bildung eines Laminats und daraufhin das Vernetzen des Laminats durch Erhitzen.

24. Verfahren zur Herstellung eines laminierten Glases nach Anspruch 23, wobei die Abquetschwalzen eine Temperatur von 70 bis 130 °C aufweisen.

25. Verfahren zur Herstellung eines laminierten Glases nach Anspruch 23 oder 24, wobei eine Erhitzungs- und Pressbehandlung nicht ausgeführt wird, bevor die Zwischenfolie durch die Abquetschwalze geführt wird.

## Revendications

1. Film intermédiaire pour un verre feuilleté comprenant un feuilleté constitué d'une couche (couche PVB) d'une composition comprenant du polyvinylbutyral et d'une couche réticulée (couche EVA) d'une composition comprenant un copolymère d'éthylène/acétate de vinyle contenant un peroxyde organique,
**caractérisé en ce que** la composition comprenant du polyvinylbutyral contient un composé de benzophénone en tant qu'absorbeur d'ultraviolet, et la composition comprenant du polyvinylbutyral et la composition comprenant un copolymère d'éthylène/acétate de vinyle ne contiennent pas de sel de métal alcalin ou de sel de métal alcalino-terreux d'acide gras.

2. Film intermédiaire selon la revendication 1, qui est un feuilleté de trois couches ou plus dans lequel au moins une couche PVB et au moins une couche EVA sont alternativement superposées l'une sur l'autre.

3. Film intermédiaire selon la revendication 1 ou 2, qui est un feuilleté de trois couches dans lequel une couche EVA est superposée sur l'autre côté de la couche PVB.

4. Film intermédiaire selon la revendication 1 ou 2, qui est un feuilleté de trois couches dans lequel la couche PVB, la couche EVA et une couche PVB sont superposées l'une sur l'autre dans cet ordre.

5. Film intermédiaire selon l'une quelconque des revendications 1 à 4, dans lequel la composition comprenant du polyvinylbutyral et la composition comprenant un copolymère d'éthylène/acétate de vinyle ne contiennent pas de composé de benzotriazole et un composé de benzophénone en tant qu'absorbeur d'ultraviolet.

6. Film intermédiaire selon l'une quelconque des revendications 1 à 5, dans lequel la composition comprenant un copolymère d'éthylène/acétate de vinyle contient un composé de benzophénone en tant qu'absorbeur d'ultraviolet.

7. Film intermédiaire selon l'une quelconque des revendications 1 à 6, dans lequel le composé de benzophénone est un composé représenté par la formule (I) suivante: 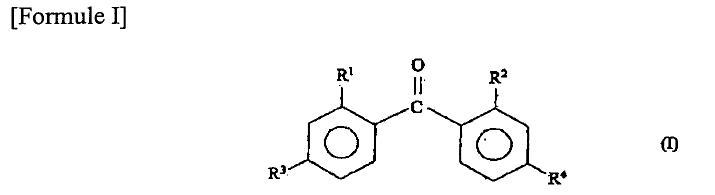 dans laquelle R¹ représente un groupe hydroxy, R² représente un atome d'hydrogène ou un groupe hydroxy, R³ représente un atome d'hydrogène, un groupe hydroxy, un groupe alkyle de 1 à 14 atomes de carbone ou un groupe alcoxy de 1 à 14 atomes de carbone, et R⁴ représente un atome d'hydrogène, un groupe hydroxy, un groupe alkyle de 1 à 14 atomes de carbone ou un groupe alcoxy de 1 à 14 atomes de carbone.

8. Film intermédiaire selon l'une quelconque des revendications 1 à 7, dans lequel la couche PVB possède une épaisseur de pas moins de 0,1 mm et la couche EVA possède une épaisseur de pas moins de 0,1 mm.

9. Film intermédiaire selon l'une quelconque des revendications 1 à 8, dans lequel une épaisseur totale de la ou de toutes les couches PVB est dans l'intervalle de 0,1 à 2,0 mm.

10. Film intermédiaire selon l'une quelconque des revendications 1 à 9, dans lequel une épaisseur totale de la ou de toutes les couches EVA est dans l'intervalle de 0,1 à 1,0 mm.

11. Film intermédiaire selon l'une quelconque des revendications 1 à 10, dans lequel le rapport (couche(s) EVA/couche(s) PVB) de l'épaisseur totale de la ou de toutes les couches EVA sur l'épaisseur totale de la ou de toutes les couches PVB est dans l'intervalle de 1 à 6.

12. Film intermédiaire selon l'une quelconque des revendications 1 à 11, dans lequel une épaisseur totale de la ou de toutes les couches EVA et de la ou de toutes les couches PVB est dans l'intervalle de 0,3 à 3,0 mm.

13. Film intermédiaire selon l'une quelconque des revendications 1 à 12, dans lequel une épaisseur totale de la ou de toutes les couches EVA et de la ou de toutes les couches PVB est dans l'intervalle de 0,7 à 1,0 mm.

14. Film intermédiaire selon l'une quelconque des revendications 1 à 13, dans lequel la quantité d'une unité récurrente d'acétate de vinyle du copolymère d'éthylène-acétate de vinyle est dans l'intervalle de 23 à 38% en poids sur la base de 100 parties en poids du copolymère d'éthylène-acétate de vinyle.

15. Film intermédiaire selon l'une quelconque des revendications 1 à 14, dans lequel le copolymère d'éthylène-acétate de vinyle possède un indice de fluidité (MFI) de 1,5 à 30,0 g/10 min.

16. Film intermédiaire selon l'une quelconque des revendications 1 à 15, dans lequel la composition comprenant du polyvinylbutyral contient un composé de benzophénone dans une quantité de 0,01 à 3,0 parties en poids sur la base de 100 parties en poids de polyvinylbutyral.

17. Film intermédiaire selon l'une quelconque des revendications 1 à 16, dans lequel le copolymère d'éthylène-acétate de vinyle contient le peroxyde organique dans une quantité de 0,05 à 5,0 parties en poids sur la base de 100 parties en poids de copolymère d'éthylène-acétate de vinyle.

18. Film intermédiaire selon l'une quelconque des revendications 1 à 17, dans lequel la composition comprenant du polyvinylbutyral comprend une résine de polyvinylacétal obtenue par l'acétalisation d'un polyvinylalcool avec (a) un aldéhyde de 4 à 6 atomes de carbone et (b) un aldéhyde de 1 à 3 atomes de carbone, et un plastifiant,
la teneur totale de (A) une unité de vinylacétal dérivée de l'aldéhyde (a) et (B) une unité de vinylacétal dérivée de l'aldéhyde (b) étant de 60 à 90% en poids sur la base du poids total de la résine de polyvinylacétal et le rapport en poids (A:B) de l'unité de vinylacétal (A) et de l'unité de vinylacétal (B) étant de 10-80:90-20.

19. Verre feuilleté comprenant deux substrats transparents et le film intermédiaire selon l'une quelconque des revendications 1 à 18 fourni entre ceux-ci, les substrats transparents et le film intermédiaire étant intégrés en les collant les uns avec les autres.

20. Verre feuilleté comprenant ce qui est défini dans la revendication 19, dans lequel les deux substrats transparents sont des plaques de verre.

21. Verre feuilleté comprenant ce qui est défini dans la revendication 19, dans lequel un des deux substrats transparents est une plaque de verre et l'autre est un film de plastique.

22. Verre feuilleté comprenant ce qui est défini dans la revendication 19, dans lequel les deux substrats transparents sont des films de plastique.

23. Procédé pour la préparation d'un verre feuilleté comprenant:
le passage du film intermédiaire selon l'une quelconque des revendications 1 à 18 intercalé entre deux substrats transparents à travers des rouleaux pinceurs, et le pressage et le laminage de ceux-ci pour former un feuilleté, et ensuite la réticulation du feuilleté par un chauffage.

24. Procédé pour la préparation d'un verre feuilleté selon la revendication 23, dans lequel les rouleaux pinceurs ont une température de 70 à 130°C.

25. Procédé pour la préparation d'un verre feuilleté selon la revendication 23 ou 24, dans lequel il n'est pas réalisé de traitement par chauffage et pressage avant le passage du film intermédiaire à travers le rouleau pinceur.
